# EUROPÄISCHE PATENTSCHRIFT

(11) **EP 2 946 710 B1**
(45) Veröffentlichungstag und Bekanntmachung des Hinweises auf die Patenterteilung: **30.08.2017**
(21) Anmeldenummer: 15166780.5
(22) Anmeldetag: 07.05.2015
(51) Int. Cl.: A47L 7/00, A47L 9/28, B23Q 11/00

(54) **HAND-WERKZEUGMASCHINE MIT EINEM PARTIKELABFUHR-ANSCHLUSS**
MANUALLY OPERATED MACHINE TOOL WITH A PARTICLE DISCHARGE CONNECTION
MACHINE-OUTIL MANUELLE DOTÉE D'UN RACCORD D'ÉVACUATION DE PARTICULES

(30) Priorität: 20.05.2014 DE 102014007402
(43) Veröffentlichungstag der Anmeldung: 25.11.2015
(73) Patentinhaber: Festool GmbH, 73240 Wendlingen am Neckar (DE)
(72) Erfinder: Fuchs, Martin, 73240 Wendlingen (DE); Behmüller, Stefan, 89608 Griesingen (DE)
(74) Vertreter: Patentanwälte Bregenzer und Reule Partnerschaftsgesellschaft mbB

(56) Entgegenhaltungen:
- EP-A1- 0 022 435
- EP-A1- 1 136 174
- DE-A1- 3 710 619
- DE-A1- 10 356 927
- DE-A1-102011 087 362
- DE-C2- 4 238 564
- US-A1- 2001 050 186

## Beschreibung

Die Erfindung betrifft eine Hand-Werkzeugmaschine mit einem Antriebsmotor und einer durch den Antriebsmotor antreibbaren Werkzeugaufnahme, gemäß dem Oberbegriff des Anspruchs 1.

Eine derartige Hand-Werkzeugmaschine ist in DE 10 2011 087 362 A1 beschrieben.

Beim Bearbeiten von Werkstücken, beispielsweise aus Holz, mit einer Hand-Werkzeugmaschine, beispielsweise einer Schleifmaschine, einer Säge oder dergleichen, fallen Späne, Staub oder dergleichen an. In der Regel verwendet man einen Staubauffangbehälter, beispielsweise einen Sack, der hinten an den Partikelabfuhr-Anschluss angeschlossen wird. Komfortabler und effektiver ist die Verwendung eines Staubsaugers, der alternativ als eine Partikelsammeleinrichtung an den Partikelabfuhr-Anschluss anschließbar ist. Der Partikelstrom führt dann vom Arbeitsbereich, beispielsweise der Oberfläche des Werkstücks, das mit dem Arbeitswerkzeug bearbeitet wird, durch den Partikelabfuhr-Anschluss zur Partikelsammeleinrichtung, beispielsweise dem Staubsauger, so dass der Arbeitsbereich zumindest im Wesentlichen frei von Partikeln gehalten wird. Der Benutzer wird dadurch geschont. Allerdings ist es auch wichtig, dass die Partikelabfuhr zuverlässig geschieht, das heißt dass möglichst wenig oder gar keine Partikel in die Umgebung um die Hand-Werkzeugmaschine herum gelangen, was nämlich zum einen störend ist, aber auch zur ernsthaften Gesundheitsgefährdungen des Nutzers der Hand-Werkzeugmaschine führen können.

Es ist daher die Aufgabe der vorliegenden Erfindung, eine beispielsweise im Hinblick auf Zuverlässigkeit und Sicherheit der Partikelabfuhr verbesserte Hand-Werkzeugmaschine bereitzustellen.

Zur Lösung der Aufgabe ist eine Hand-Werkzeugmaschine gemäß der technischen Lehre des Anspruchs 1 vorgesehen.

Es ist dabei ein Grundgedanke, dass auf sensorischem Wege, nämlich anhand eines oder mehrerer Überwachungssensoren, sichergestellt wird, dass die Partikelabfuhr zuverlässig funktioniert. Eine hier wesentliche Überlegung ist es, dass beispielsweise das Vorhandensein der Partikelsammeleinrichtung am Partikelabfuhr-Anschluss sichergestellt ist. Dazu dient der Überwachungssensor, der die Präsenz der Partikelsammeleinrichtung am Partikelabfuhr-Anschluss ermittelt und das mindestens eine Präsenzsignal erzeugt. Der Überwachungssensor weist beispielsweise einen optischen Sensor, einen induktiven Sensor oder einen magnetisch schaltbaren Sensor auf, der durch ein Anschlusselement, zum Beispiel eine Anschlussmuffe, der Partikelsammeleinrichtung betätigbar ist. Die Anschlussmuffe ist beispielsweise an einem Staubsammelbehälter oder Partikel-Sammelbehälter vorgesehen oder auch an einem Schlauch, der an den Partikelabfuhr-Anschluss angeschlossen, beispielsweise angesteckt, wird.

Bei der Hand-Werkzeugmaschine ist vorteilhaft vorgesehen, dass die Überwachungseinrichtung mindestens einen Überwachungssensor zur Bereitstellung mindestens einer von der Partikelströmung über den Partikelabfuhr-Anschluss abhängigen Partikelströmungsinformation aufweist und zur Auslösung mindestens einer Funktion in Abhängigkeit von der mindestens einen Partikelströmungsinformation ausgestaltet ist.

Ein weiterer Aspekt ist es also, dass auch die Partikelströmung erfasst wird, d.h. dass der mindestens eine Überwachungssensor eine Partikelströmungsinformation liefert, die von der Partikelströmung über den Partikelabfuhr-Anschluss abhängt. Dabei kann es sich beispielsweise um einen Strömungswert, einen Druckwert oder beides handeln, das heißt dass beispielsweise der Saugstrom, den eine als Staubsauger ausgestaltete Partikelsammeleinrichtung erzeugt und der über den Partikelabfuhr-Anschluss strömt, von dem mindestens einen Überwachungssensor hinsichtlich seiner Strömungsgeschwindigkeit und/oder seines Drucks überwacht wird. Aber auch eine Trübung, d.h. eine Beladung des Saugstroms oder Partikelstroms mit Partikeln kann von dem mindestens einen Überwachungssensor ermittelt werden. Beispielsweise ist auf optischem Wege eine Trübung des Partikelstroms mit Partikeln überwachbar.

Der mindestens eine Überwachungssensor umfasst also beispielsweise einen optischen Sensor, mit dem der Anschluss eines Anschlusselements an den Partikelabfuhr-Anschluss optisch erfasst wird. Beispielsweise verdunkelt das Anschlusselement den Partikelabfuhr-Anschluss, der beispielsweise durch einen Anschlussstutzen gebildet ist, was der mindestens eine Überwachungssensor erfasst.

Vorzugsweise handelt es sich bei dem optischen Sensor um einen Fotowiderstand, einen Fototransistor, eine Fotodiode oder dergleichen. Besonders bevorzugt ist in diesem Zusammenhang eine Temperaturkompensation, weil insbesondere Lichtsensoren oder optische Sensoren von der Temperatur abhängig sein können. Hier schafft Abhilfe, wenn zweckmäßigerweise das Präsenzsignal oder die Partikelströmungsinformation, die ein optischer Sensor liefert, durch mindestens einen Temperatursensor kompensiert wird.

Besonders bevorzugt ist weiterhin, dass ein Einfluss von Fremdlicht kompensiert wird oder verhindert wird. Beispielsweise könnte Fremdlicht den optischen Sensor beeinflussen, das aus dem Arbeitsbereich, beispielsweise durch Löcher im Arbeitswerkzeug, zu dem Sensor gelangt. Insbesondere Schleifteller und dergleichen andere Schleifwerkzeuge haben in der Regel so genannte Absauglöcher oder Absaugöffnungen, durch die zum einen bestimmungsgemäß die Absaugluft, das heißt letztlich der Partikelstrom, strömt, zum andern eben auch Licht in Richtung des mindestens einen als optischer Sensor ausgestalteten Überwachungssensors gelangen kann. Als Gegenmaßnahme eignet sich beispielsweise eine Abschattungseinrichtung, beispielsweise eine Abdeckung oder dergleichen, die den Einfluss von Fremdlicht auf den Überwachungssensor mindert oder eliminiert.

Bevorzugt ist es, wenn der mindestens eine Überwachungssensor in einem Innenraum des Partikelabfuhr-Anschlusses oder eines zu dem Partikelabfuhr-Anschluss führenden Partikelabfuhrkanals angeordnet ist. Dadurch ist er geschützt. Es ist weiterhin zweckmäßig, wenn der Überwachungssensor über einen Lichtleiter mit diesem Innenraum kommuniziert, d.h. dass er nicht direkt im Innenraum angeordnet ist, sondern etwas abseits, jedoch Licht über den Lichtleiter zum Überwachungssensor gelangen kann.

Es ist es zweckmäßig, wenn ein Messbereich oder Licht-Eintrittsbereich für den mindestens einen als optischen Sensor ausgestalteten Überwachungssensor, der sozusagen durch das Anschlusselement der Partikelsammeleinrichtung verdunkelt oder verschattet wird, am radial äußeren Umfang des Partikelabfuhr-Anschlusses bzw. eines Anschlusskörpers des Partikelabfuhr-Anschlusses angeordnet ist. Bevorzugt verläuft ein Lichtleiter von dem Messbereich (z.B. radial außen) zu dem Überwachungssensor hin. Der Lichtleiter ist vorzugsweise zu einem Staubkanal, über den der Partikelabfuhr-Anschluss mit dem Arbeitsbereich des Arbeitswerkzeugs kommuniziert, hin abgeschottet oder verdunkelt, beispielsweise durch eine Wand.

Es ist aber auch möglich, dass beispielsweise ein Tastsensor, insbesondere ein Druckschalter, durch das Anschlusselement der Partikelsammeleinrichtung betätigt wird.

Ein induktiver Sensor, beispielsweise ein Reed-Kontakt, ein Hallsensor oder dergleichen, kann ebenfalls durch die Partikelsammeleinrichtung bzw. deren Anschlusselement, betätigbar sein.

Eine weitere Variante der Erfindung sieht vor, dass der mindestens eine Überwachungssensor elektrische Kontakte und die Partikelsammeleinrichtung eine elektrische Leitung aufweisen, wobei die elektrische Leitung beim Anschluss der Partikelsammeleinrichtung an den Partikelabfuhr-Anschluss die elektrischen Kontakte des Überwachungssensors miteinander elektrisch verbindet. Die elektrische Leitung wird beispielsweise durch eine Antistatik-Leitungsanordnung, beispielsweise eine Folie oder dergleichen, hergestellt. Mithin kann also z.B. ein an sich bekannter Antistatik-Schlauch dazu verwendet werden, den mindestens einen Überwachungssensor zu betätigen oder kurz zu schließen.

Die Temperaturkompensation, wie bereits erwähnt wurde, kann selbstverständlich nicht nur beim Präsenzsignal, sondern alternativ oder ergänzend auch hinsichtlich der Partikelströmungsinformation sinnvoll eingesetzt werden.

Der Überwachungssensor kann auch einen Strömungssensor, einen Drucksensor, insbesondere einen Differenzdrucksensor, oder dergleichen umfassen. Auch eine Temperatursensoranordnung eignet sich zur Erfassung eines Drucks oder einer Strömungsgeschwindigkeit der Partikelströmung. Die Partikelströmung hat beispielsweise einen Kühleffekt auf die Temperatursensoranordnung, was diese als Strömungsinformation oder Druckinformation erfasst. An dieser Stelle sei bemerkt, dass die Temperatursensoranordnung selbstverständlich vorteilhaft eine Temperaturkompensation umfasst, das heißt dass beispielsweise eine Umgebungstemperatur um die Temperatursensoranordnung herum, verursacht zum Beispiel durch den Antriebsmotor, Reibungswärme oder Abriebwärme, insbesondere im Bereich des Arbeitswerkzeugs, oder dergleichen, zur Temperaturkompensation eingesetzt oder überwacht und verwendet wird. Beispielsweise ist der Innenbereich des Antriebsmotors oder des Arbeitswerkzeugs oder beiden jeweils einen Temperatursensor vorgesehen, der den Einfluss von beispielsweise Abriebwärme, Motorwärme und dergleichen, erfasst, was dann zur Temperaturkompensation des beispielsweise zur Druckauffassung vorgesehenen oder zur optischen Erfassung der Partikelsammeleinrichtung vorgesehenen Überwachungssensors eingesetzt wird.

Der mindestens eine Überwachungssensor ist zweckmäßigerweise nicht direkt am Partikelabfuhr-Anschluss oder im Kanal des Partikelabfuhr-Anschlusses oder im Kanal zum Partikelabfuhr-Anschluss angeordnet, sondern zweckmäßigerweise an einem Fremdlufteinlass oder Bypass-Kanal. Über den Fremdlufteinlass kann Fremdluft in die Partikelströmung zu dem Partikelabfuhr-Anschluss einströmen. Über den Bypasskanal strömt ein Teil der Partikelströmung. In beiden Fällen ist es vorteilhaft, dass nicht sozusagen der besonders mit Partikeln beladene Partikelstrom vom Überwachungssensor überwacht wird, sondern beispielsweise die Fremdluft, die sozusagen zum Partikelabfuhr-Anschluss an- oder eingesaugt wird und zumindest im Wesentlichen frei von Partikeln ist. Dadurch wird eine Verschmutzung des Überwachungssensors, der an einem derartigen Fremdlufteinlass angeordnet ist, weitgehend vermieden.

Der Überwachungssensor kann beispielsweise auch einen optischen Sensor zur Überwachung oder Erfassung einer Trübung der Partikelströmung durch Partikel umfassen.

Die Überwachungseinrichtung löst die mindestens eine Funktion zweckmäßigerweise in Abhängigkeit davon aus, ob der mindestens eine Überwachungssensor ein Fehlen der Partikelsammeleinrichtung an dem Partikelabfuhr-Anschluss und/oder ein Absinken der Partikelströmung unter einen Schwellwert signalisiert. Insbesondere dann, wenn zwar eine Partikelsammeleinrichtung angeschlossen ist, jedoch die Partikelströmung nicht mehr ausreichend ist, d.h. dass beispielsweise die Trübung zu groß ist, die Strömungsgeschwindigkeit zu klein oder dergleichen, wird die mindestens eine Funktion ausgelöst.

Die mindestens eine Funktion kann eine oder mehrere Funktionen umfassen, wovon beispielhaft einige Varianten erläutert werden:
Die mindestens eine Funktion umfasst beispielsweise eine Ausgabe der Partikelströmungsinformation und/oder des Präsenzsignals an einer optischen oder akustischen Anzeigeeinrichtung oder beiden. Beispielsweise kann ein Lautsprecher signalisieren, dass die Partikelströmung unter einen Grenzwert geht. Auch eine optische Anzeige, beispielsweise mit mehreren LEDs oder dergleichen anderen Ausgabemitteln, kann signalisieren, ob die Partikelströmung ausreichend ist, das heißt der Arbeitsbereich in ausreichendem Maße von Partikeln befreit wird, oder ob eine Störung vorliegt. Beispielsweise kann doch eine rote LED-Anzeige signalisiert werden, dass der Betrieb der Hand-Werkzeugmaschine nicht mehr mit ausreichender Partikelabfuhr erfolgt11.

Die Anzeigeeinrichtung, beispielsweise der Lautsprecher, das Display, insbesondere ein LCD-Display, oder dergleichen, bildet zweckmäßigerweise einen Bestandteil der Hand-Werkzeugmaschine.

Bevorzugt ist es, dass die Partikelströmungsinformation nur dann ausgegeben wird oder insbesondere abhängig davon ausgegeben wird, ob das Präsenzsignal eine Nutzung des Partikelabfuhr-Anschlusses durch die Partikelsammeleinrichtung signalisiert. Wenn also beispielsweise gar keine Partikelsammeleinrichtung angeschlossen ist, macht es gemäß dieser Maßnahme auch keinen Sinn, dass die Partikelströmungsinformation, beispielsweise die Trübung des Partikelströmung oder deren Geschwindigkeit, angezeigt wird.

Es ist auch möglich, dass in dieser Situation die Partikelströmungsinformation eine andere Wertung erfährt, d.h. dass beispielsweise bei nicht an den Partikelabfuhr-Anschluss angeschlossener Partikelsammeleinrichtung eine Partikelströmung zwar an sich erlaubt ist, jedoch nur bis zu einem gewissen Verschmutzungsgrad, d.h. Belastung der Luftströmung durch den Partikelabfuhr-Anschluss mit Partikeln.

Die mindestens eine Funktion kann aber auch eine Steuerung, insbesondere eine leitungsgebundene oder drahtlose Steuerung, einer Antriebsleistung des Antriebsmotors der Hand-Werkzeugmaschine umfassen. Wenn also beispielsweise die Partikelströmung zu gering ist, keine Partikelsammeleinrichtung angeschlossen ist oder dergleichen, werden die Antriebsleistung des Antriebsmotors und somit auch die Erzeugung von Partikeln durch das Arbeitswerkzeug, begrenzt.

Vorzugsweise ist auch eine drahtlose oder drahtgebundene Steuerung eines Saugaggregats der Partikelsammeleinrichtung vorgesehen. Wenn also die Partikelströmung beispielsweise zu gering ist, wird die Leistung des Saugaggregats angehoben.

Die Überwachungseinrichtung ist zweckmäßigerweise zu einer logischen Verknüpfung der mindestens einen Partikelströmungsinformation der Partikelströmung und des Präsenzsignals ausgestaltet. Wie gesagt, wird die Partikelströmungsinformation zweckmäßigerweise nur dann angezeigt, wenn das Präsenzsignal eine Präsenz der Partikelsammeleinrichtung am Partikelabfuhr-Anschluss signalisiert.

Bevorzugt ist auch eine Verzögerungslogik dahingehend, dass sie erst nach einer vorbestimmten Zeit nach einem Anlaufen des Antriebsmotors der Hand-Werkzeugmaschine eine Störungsinformation erzeugt, wenn das Präsenzsignal ein Fehlen der Partikelsammeleinrichtung einem Partikelabfuhr-Anschluss und/oder die Partikelströmungsinformation eine für eine vorbestimmte Betriebsart der Hand-Werkzeugmaschine unzulässige Partikelströmung, z.B. zu geringe Strömungsgeschwindigkeit, anzeigt. Dadurch wird dem Umstand Rechnung getragen, dass in der Regel zunächst die Hand-Werkzeugmaschine anläuft, diese dann sozusagen nachlaufend auch das Saugaggregat zum Laufen bringt. Normalerweise wird nämlich die Hand-Werkzeugmaschine eingeschaltet, wobei dann ein Strom vom Staubsauger bereitgestellt wird, den der Staubsauger erfasst und daraus ermittelt, dass er anlaufen muss. Weiterhin trägt diese Maßnahme dazu bei, dass der Anlaufstrom der Kombination bestehend aus Staubsauger und Hand-Werkzeugmaschine nicht zu groß ist.

Bevorzugt ist es, wenn die erfindungsgemäße Überwachungseinrichtung aktivierbar und deaktivierbar ist, so dass beispielsweise eine Blockierung der Hand-Werkzeugmaschine bei fehlender Staubabsaugeinrichtung oder Partikelsammeleinrichtung abschaltbar ist. Beispielsweise ist ein Aktivierungsschalter zum Aktivieren oder Deaktivieren der Überwachungseinrichtung vorgesehen. Der Aktivierungsschalter wird beispielsweise durch ein Anschlusselement der Partikelsammeleinrichtung betätigt. Es ist aber auch möglich, dass ein Antriebsschalter zum schalten des Antriebsmotors denen Aktivierungsschalter bereitstellt. Weiterhin ist es möglich, dass ein separater, speziell für die Überwachungseinrichtung vorgesehener Aktivierungsschalter vorhanden ist.

Nachfolgend wird ein Ausführungsbeispiel der Erfindung anhand der Zeichnung erläutert. Es zeigen:
- Figur 1: eine perspektivische Schrägansicht eine Kommission bestehend aus einer Hand-Werkzeugmaschine sowie einem Staubsauger als Partikelsammeleinrichtung,

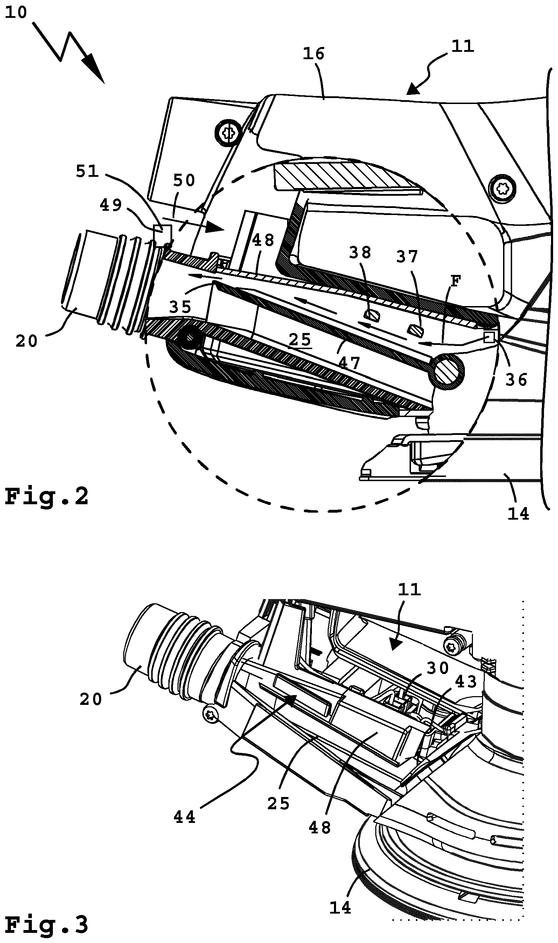

- Figur 2: einen hinteren Teil der Hand-Werkzeugmaschine gemäß Figur 1 mit einer partiellen Ausschnittsvergrößerung als Schnittdarstellung, wobei ein Bypasskanal vergrößert dargestellt ist,
- Figur 3: den hinteren Teil der Hand-Werkzeugmaschine gemäß Figur 2, jedoch mit teilweise geöffneten Gehäuse,
- Figur 4: einen Führungselement zum Führen eines Luftstroms in den By-passkanal gemäß Figur 2,
- Figur 5: eine weitergebildete oder alternative Ausführungsform der Hand-Werkzeugmaschine gemäß der Erfindung mit zwei Varianten von Überwachungssensoren, die Präsenzsignale ermitteln, und
- Figur 7: eine teilweise geschnittene Seitenansicht eines hinteren Teils der Hand-Werkzeugmaschine gemäß Figur 6 mit einer optischen Überwachungssensoranordnung.

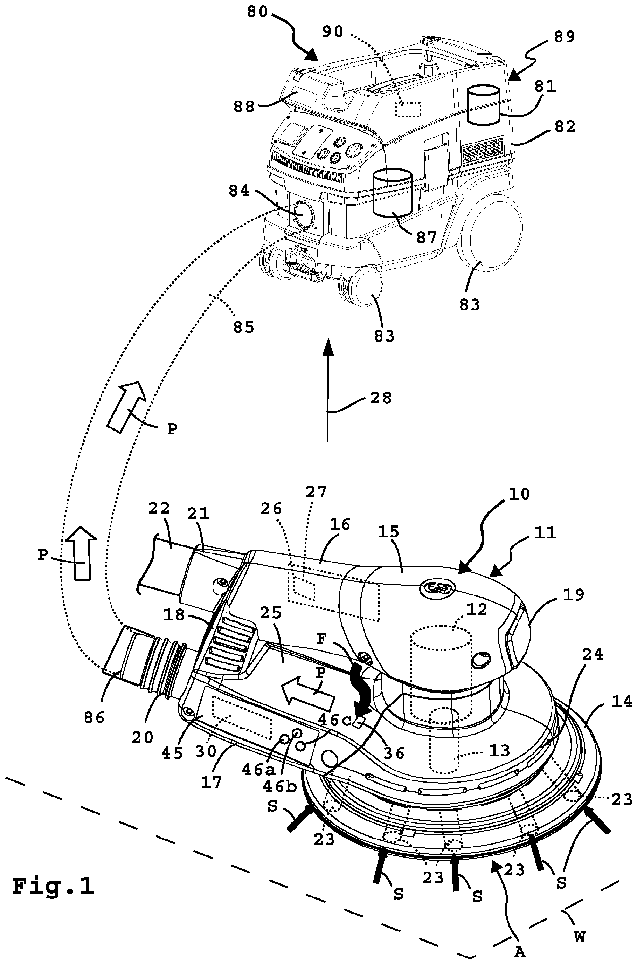

Eine in Figur 1 dargestellte Anordnung bzw. Werkzeugkombination zeigt eine Partikelsammeleinrichtung 80 und eine Hand-Werkzeugmaschine 10, beispielsweise eine Schleifmaschine, in deren Maschinengehäuse 11 ein Antriebsmotor 12 zum Antreiben einer Werkzeugaufnahme 13 angeordnet ist. An die Werkzeugaufnahme 13 angeschlossen ist vorliegend ein Schleifteller als ein Arbeitswerkzeug 14. Dies ist beispielhaft zu verstehen, d.h. die erfindungsgemäße Hand-Werkzeugmaschine muss nicht unbedingt eine Schleifmaschine sein, wenn das auch bevorzugt der Fall ist, sondern kann beispielsweise auch eine Fräsmaschine, eine Säge oder ein dergleichen anderes maschinelles Hand-Werkzeug sein, wobei als Arbeitswerkzeug z.B. ein Sägeblatt, ein Bohrer, ein Fräswerkzeug etc. möglich ist.

Der Antriebsmotor 12 ist beispielsweise in einem vorderen Abschnitt 15 des Maschinengehäuses 11 angeordnet, zu dessen in der Zeichnung etwa senkrecht dargestellten Längsachse, in welcher sich der Antriebsmotor 12, vorzugsweise auch ein Getriebe, über das der Antriebsmotor 12 die Werkzeugaufnahme 13 antreibt, in der Zeichnung nach hinten, also etwa rechtwinkelig, Abschnitte 16 und 17 des Maschinengehäuses 11 erstrecken vom Abschnitt 15 abstehen. Die Abschnitte 16 und 17 sind durch einen Querabschnitt 18 miteinander verbunden, wobei der Querabschnitt 18 sowie die Abschnitte 15, 16, 17 eine Durchtrittsöffnung begrenzen. Der Abschnitt 16 bildet einen Handgriff aus, der von einem Bediener umgriffen werden kann.

Vorn am Abschnitt 15 des Maschinengehäuses 11 ist ein Antriebsschalter 19 zum Einschalten oder Ausschalten des Antriebsmotors 12 angeordnet. Der Bediener kann also den Abschnitt 16 umgreifen, gegebenenfalls eine Führungshand oben auf das Maschinengehäuse 11 auflegen und dabei den Antriebsschalter 19, jedenfalls dessen Druckfläche, betätigen.

Am freien Endbereich des Abschnittes 16 ist ein Versorgungsanschluss 21 zum Anschließen einer Versorgungsleitung 22 vorgesehen, beispielsweise eines Netzkabels oder eines Druckluftschlauches, mit dem die Hand-Werkzeugmaschine 10 und letztlich auch der Antriebsmotor 12 mit Energie, beispielsweise Elektrizität oder Druckluft, versorgt werden kann. Selbstverständlich ist alternativ auch eine Ausführungsform der Hand-Werkzeugmaschine mit einem lokalen Speicher, beispielsweise einem Akkupack oder dergleichen, möglich.

Am freien Endbereich des Abschnittes 17 hingegen ist ein Partikelabfuhr-Anschluss 20 vorgesehen, über den ein Partikelstrom P aus einem Arbeitsbereich A, in welchem das Arbeitswerkzeug 14 ein Werkstück W, zum Beispiel eine Holzplatte, einen lackierten, metallischen Untergrund oder dergleichen, bearbeitet, strömen kann. Bei der Bearbeitung des Werkstücks W anhand des Arbeitswerkzeugs 14 anfallende Partikel strömen beispielsweise durch Durchtrittsöffnungen 23 des Arbeitswerkzeugs 14 in einen Innenraum 24 des Maschinengehäuses 11 oberhalb des Arbeitswerkzeugs 14 und gelangen von dort über einen Partikelabfuhrkanal 25 zum Partikelabfuhr-Anschluss 20.

An den Partikelabfuhr-Anschluss 20 ist ein Anschlusselement 86 eines Saugschlauches 85 anschließbar, über welchen eine Strömungsverbindung zwischen der Hand-Werkzeugmaschine 10 und der Partikelsammeleinrichtung 80 in Gestalt beispielsweise eines Staubsaugers 89 herstellbar ist.

Das Anschlusselement 86, beispielsweise eine Anschlussmuffe, könnte selbstverständlich auch vorn an einem Sammelbehälter, zum Beispiel einem Sack, angeordnet sein, der an den Partikelabfuhr-Anschluss 20 ansteckbar ist.

Die Partikelsammeleinrichtung 80, also der Staubsauger 89, hat jedoch ein Saugaggregat 81 mit dem ein Saugstrom S erzeugbar ist, der mit Partikeln aus dem Arbeitsbereich A beladen ist und dann einen Partikelstrom P bildet. Der Partikelstrom P durchströmt den Saugschlauch 85.

Im Ansaugbereich des Arbeitswerkzeugs 14 ist der Partikelstrom P sozusagen noch Umgebungsluft oder Frischluft, wird daher noch als Saugstrom S bezeichnet. Der Saugstrom S strömt durch die Durchtrittsöffnungen 23 hindurch und nimmt dabei Partikel, zum Beispiel Staub, mit, so dass er zu dem Partikelstrom P wird, wenn er den Partikelabfuhr-Anschluss 20 durchströmt.

Das Saugaggregat 81 ist in einem Gehäuse 82 des Staubsaugers 89 oder der Partikelsammeleinrichtung 80 angeordnet. Das Gehäuse 82 ist auf Rollen 83 auf einem Untergrund verfahrbar. Jedenfalls ist es vorteilhaft, wenn die Partikelsammeleinrichtung 80 eine mobile, tragbare und/oder fahrbare Partikelsammeleinrichtung, insbesondere ein mobiler, tragbarer und/oder fahrbarer Staubsauger, ist. Das erfindungsgemäße Prinzip der Hand-Werkzeugmaschine 10 oder einer alternativ erfindungsgemäß ausgebildeten Hand-Werkzeugmaschine eignet sich jedoch auch zur Verwendung mit einer stationären Absauganlage.

Im Gehäuse 82 ist ferner ein Staubsammelraum 87 vorgesehen, der in Strömungsrichtung hinter einem Anschluss 84 für den Saugschlauch 85 angeordnet ist und in welchem die Partikel des Partikelstroms P zurückgehalten und gesammelt werden. Im Staubsammelraum 87 kann beispielsweise ein Filtersack oder ein sonstiger Filterbehälter angeordnet sein, was aber nicht sein muss. Es genügt beispielsweise, dass zwischen dem Staubsammelraum 87, den man auch als Partikelsammelraum bezeichnen könnte, und dem Saugaggregat 81 beispielsweise ein gelegentlich abzureinigendes Filterelement angeordnet ist.

Das Saugaggregat 81 ist beispielsweise durch eine Steuerung 88 ansteuerbar, die vorzugsweise mit einer Steuerung 26 der Hand-Werkzeugmaschine 10 und/oder einer nachfolgend erläuterten Überwachungseinrichtung 30 der Hand-Werkzeugmaschine 10 kommuniziert und vorzugsweise durch die Steuerung 26 oder die Überwachungseinrichtung 30 ansteuerbar ist.

Die Überwachungseinrichtung 30 umfasst z.B. eine Überwachungssensoranordnung 31 mit einem die Partikelströmung P, insbesondere deren Druck oder Strömungsgeschwindigkeit überwachenden Überwachungssensor 32, 33. Die Überwachungssensoren 32, 33 sind in einer so genannten Wheatstone-Brücke verschaltet. Die Überwachungssensoren 32, 33 sind im Innenraum eines Bypasskanals 34 angeordnet, der sich parallel zum Partikelabfuhrkanal 25 erstreckt und in diesen mit einem Auslass 35 ausmündet. Der Bypasskanal 34 hat einen als Fremdlufteinlass 36 ausgestalteten Einlass an einer Wand des Maschinengehäuses 11, beispielsweise im Bereich des Abschnittes 17, durch den Fremdluft F, also mit wenig oder gar keinen Partikeln beladene frische Luft, in den Bypasskanal 34 einströmen kann. Die Fremdluft F wird sozusagen vom Partikelstrom P mitgerissen bzw. angesaugt. Die Fremdluft F durchströmt den Bypasskanal 34 und strömt dabei an den Überwachungssensoren 32, 33 vorbei, was diese abkühlt und somit ein Maß für den Partikelstrom P darstellt. Beispielsweise kann auf diesem Weg sozusagen analog die Strömungsgeschwindigkeit des Partikelstroms P ermittelt werden.

Die Überwachungssensoren 32, 33 sind an Vorsprüngen oder Trägern 37, 38 angeordnet, die in den Bypasskanal 34 hinein vorstehen und sich quer zur Strömungsrichtung der Fremdluft F erstrecken. Die Überwachungssensoren 32, 33 sind an Rampenflächen 39 der Vorsprünge oder Träger 38 angeordnet, so dass der Strom der Fremdluft F sozusagen durch die Vorsprünge der Träger 38 abgelenkt wird und somit die Überwachungssensoren 32, 33 sozusagen kühlt.

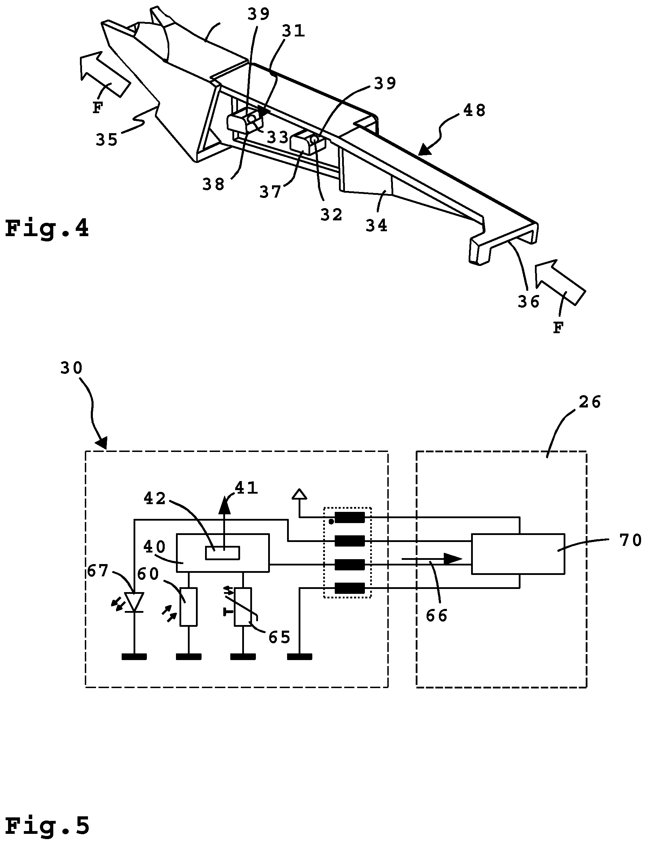

Bei den Überwachungssensoren 32, 33 handelt es sich beispielsweise um elektrische Widerstände, die durch den Fremdluftstrom F gekühlt werden, wodurch sich deren Widerstandswert ändert. Ein im Zusammenhang mit Figur 5 näher erläuterter Mikrokontroller 40 der Überwachungseinrichtung 30 kann beispielsweise anhand der Widerstandswerte der Überwachungssensoren 32, 33 als eine Partikelströmungsinformation 41 eine Strömungsgeschwindigkeit des Partikelstroms P ermitteln, der zumindest im Wesentlichen proportional zum Fremdluftstrom F ist.

Selbstverständlich ist es durch einen entsprechenden Abgleich, beispielsweise eine Fehlerkorrektur, eine Lookup-Tabelle oder dergleichen möglich, gewisse Unregelmäßigkeiten, Nichtlineariäten oder dergleichen, die bei der Messung der Fremdluft F anstelle des Partikelstroms P auftreten oder auch durch die Art der Messung anhand der als Widerstände ausgestalteten Überwachungssensoren 32, 33 zu eliminieren oder zu kompensieren. Das kann der Mikrokontroller 40 ohne weiteres leisten. Beispielsweise ist im Mikrokontroller 40 ein Auswerteprogramm 42 gespeichert, um die Widerstandswerte der Überwachungssensoren 32, 33 in eine die Strömungsgeschwindigkeit und/oder den Druck des Partikelstroms P repräsentierende Partikelströmungsinformation 41 umzurechnen.

Die Überwachungseinrichtung 30 ist vorliegend eine von der Steuerung 26 separate Baueinheit. Selbstverständlich wäre auch eine integrierte Bauweise möglich. Es ist allerdings vorteilhaft, dass die Bauelemente der Überwachungseinrichtung 30, beispielsweise eine Leiterplatte 43, auf der der Mikrokontroller 40 angeordnet ist, außerhalb des Partikelabfuhrkanals 25 angeordnet sind. Beispielsweise ist die Überwachungseinrichtung 30 im Abschnitt 17 des Maschinengehäuses 11 angeordnet.

Die Überwachungseinrichtung 30 sowie ein Führungselement 48, das zumindest oberseitig den Bypasskanal 34 begrenzt, können beispielsweise in eine Aufnahme 44 am Abschnitt 17 des Maschinengehäuses 11 eingesetzt werden.

Zum Partikelabfuhrkanal 25 hin ist der Bypasskanal 34 durch ein Wandelement 47 begrenzt.

Die Öffnung oder Aufnahme 44 ist durch einen Deckel 45 verschließbar.

An dem Deckel 45 können Anzeigeelemente 46a-46c, beispielsweise LEDs, und/oder akustische Ausgabemittel, zum Beispiel ein Lautsprecher, vorgesehen sein, um die Partikelströmungsinformation 41 auszugeben. Es versteht sich, dass die Anzeige auch einer sonstigen Stelle des Maschinengehäuses 11 zweckmäßig ist, beispielsweise oberhalb des Arbeitsbereichs A, zum Beispiel an der sich oberhalb des Arbeitswerkzeugs 14 und unterhalb des Antriebsschalters 19 erstreckenden Wand, die den Innenraum 24 oberseitig begrenzt. Dort sind die Anzeigeelemente durch einen Bediener gut einsehbar.

Wenn beispielsweise die Partikelströmung P einwandfrei ist, das heißt in einem ausreichenden Umfang Partikel aus dem Arbeitsbereich A abgeführt werden können, leuchtet ein als grüne LED ausgestaltetes Anzeigeelement 46a, bei einer kritischen, d.h. nicht mehr optimal, jedoch noch ausreichenden Partikelströmung P leuchtet dann ein als gelbe LED ausgestaltetes Anzeigeelement 46b, während schließlich bei einer kritischen, d.h. sehr geringen Partikelströmung P eine rote LED, nämlich ein Anzeigeelement 46c, leuchtet.

Selbstverständlich ließe sich eine derartige Anzeige auch mit einer einzigen LED oder einem einzigen Leuchtmittel realisieren, das verschiedene Farben aufweist. Weiterhin ist es denkbar, dass das Leuchtmittel, beispielsweise die LED, unterschiedliche Farbcodes ausgibt, das heißt dass sie beispielsweise bei grünem Dauerlicht einen ausreichenden oder optimalen Partikelstrom P signalisiert, mit einer ersten Blinkfrequenz einen noch ausreichenden Partikelstrom P anzeigt und schließlich mit einer hochfrequenten, zweiten Blinkfrequenz eine kritische Partikelströmung P signalisiert.

Eine derartige Anzeige oder Qualitätsüberwachung des Partikelstroms P ist insbesondere dann sinnvoll, wenn die Überwachungseinrichtung 30 zuvor festgestellt hat, dass tatsächlich das Anschlusselement 86 an den Partikelabfuhr-Anschluss 20, beispielsweise den Anschlussstutzen, angeschlossen ist. Beispielsweise ist zusätzlich noch ein Mikroschalter oder Taster 49 vorgesehen, der durch das auf den Partikelabfuhr-Anschluss 20 aufgesteckt Anschlusselement 86 betätigt wird, die Überwachungseinrichtung 30 mithin also einschaltet. Dann ist die Überwachung des Partikelstroms P besonders sinnvoll.

Der Taster 49 liefert ein Präsenzsignal 50, das die Präsenz der Partikelsammeleinrichtung 80, beispielsweise also das Anschlusselement 86, am Partikelabfuhr-Anschluss 20 signalisiert. Der Taster 49 bildet einen weiteren Überwachungssensor 51.

Eine Überwachung des Partikelstroms P kann auch dazu führen, dass die Hand-Werkzeugmaschine 10 die Leistung des Antriebsmotors 12 in Abhängigkeit von der Partikelströmungsinformation 41 steuert oder regelt. Wenn also beispielsweise der Partikelstrom P zu viele Partikel enthält oder die Strömungsgeschwindigkeit zu gering ist, kann beispielsweise die Steuerung 26 anhand der Partikelströmungsinformation 41 die Leistung des Antriebsmotors 12 absenken. Dadurch entsteht weniger Abrieb bzw. Abrasion, d.h. weniger Partikel fallen an.

Eine andere, alternativ oder ergänzend vorteilhafte Strategie sieht vor, dass die Überwachungseinrichtung 30 und/oder die Steuerung 26 anhand der Partikelströmungsinformation 41 das Saugaggregat 81 der Partikelsammeleinrichtung 80 ansteuern, insbesondere regeln. Beispielsweise ist ein Funkmodul 27 bei der Steuerung 26 vorgesehen, über das die Steuerung 26 der Steuerung 88 eine Steuerungsinformation 28 senden kann, anhand derer wiederum die Steuerung 88, die einen Funkempfänger 90 aufweist, die Leistung des Saugaggregats 81 nachführt, insbesondere regelt. Anstelle der drahtlosen Informationsübermittlung könnte selbstverständlich auch eine drahtgebundene oder leitungsgebundene Informationsvermittlung vorgesehen sein, beispielsweise über eine Datenleitung, die einen Bestandteil des Saugschlauches 85 bildet oder an diesem angeordnet ist.

Es ist weiterhin denkbar, dass beispielsweise das Anschlusselement 86 elektrisch leitend ist, also eine Leitung darstellt, so dass es elektrische Kontakte 52 und 53 eines weiteren Überwachungssensors 54 überbrückt oder jedenfalls elektrisch miteinander verbindet. Der Saugschlauch 85 ist beispielsweise als so genannter Antistatik-Saugschlauch ausgestaltet. Der Überwachungssensor 54 ermittelt anhand der elektrischen Verbindung der Kontakte 52, 53 eine Präsenz der Partikelsammeleinrichtung 80 am Partikelabfuhr-Anschluss 20 und erzeugt dann ein Präsenzsignal 55.

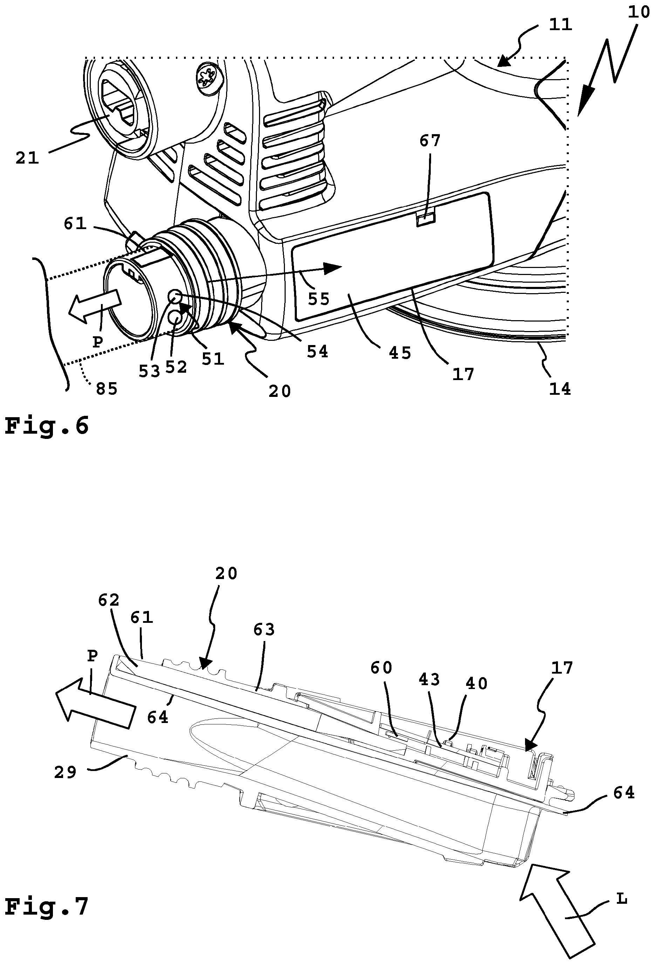

Eine optische Erfassung der Präsenz des Anschlusselement 86 am Partikelabfuhr-Anschluss 20 wird nachfolgend im Zusammenhang mit den Figuren 5 -7 erläutert. Beispielsweise ist ein Überwachungssensor 60 als ein optischer Sensor ausgestaltet. Der Überwachungssensor 60 ist z.B. an der Leiterplatte 43 angeordnet.

Am Anschlussstutzen 29 des Partikelabfuhr-Anschlusses 20 ist eine Lichteintrittsöffnung 61 vorgesehen, durch die Licht in einen Lichtleiter 62 eindringen kann. Der Lichtleiter 62 ist zwischen einer äußeren Umfangswand 63 des Anschlussstutzens 29 oder des Partikelabfuhr-Anschlusses 20 sowie einer inneren Schutzwand oder Abdeckwand 64, die den Lichtleiter 62 gegenüber dem Partikelabfuhrkanal 25 abdeckt, angeordnet. Der Lichtleiter erstreckt sich zwischen einem vorderen, freien Endbereich des Anschlussstutzens 29, der jedenfalls vom Anschlusselement 86 überdeckt und verschattet wird, wenn dieses an den Partikelabfuhr-Anschluss 20 angeschlossen ist, und dem Innenraum des Maschinengehäuses 11, nämlich der Aufnahme 44 bzw. dem Abschnitt 17. Der Lichtleiter 62 leitet das Licht von der Lichteintrittsöffnung 61 zu dem Überwachungssensor 60, wenn also beispielsweise Fremdlicht L durch die Durchtrittsöffnungen 23 in den Innenraum des Maschinengehäuses 11 gelangen kann, stört es den Überwachungssensor 60 nicht. Der Überwachungssensor 60, insbesondere der Lichtleiter 62, wird durch die Abdeckwand 64 von dem Fremdlicht L abgeschottet.

Wenn also das Anschlusselement 86 die Lichteintrittsöffnung 61 abdeckt, sendet der Überwachungssensor 60 ein Präsenzsignal 66, beispielsweise an die Steuerung 26.

Es ist auch denkbar, dass die Abdeckwand 64 weggelassen wird. Der Überwachungssensor 60 könnte dann beispielsweise überwachen, wie stark die Partikelströmung P mit Partikeln, beispielsweise Staub oder Spänen, beladen ist, und abhängig davon dann eine entsprechende Partikelströmungsinformation, beispielsweise einen Trübungswert, generieren.

Vorteilhaft ist eine Temperaturkompensation bei dem Überwachungssensors 60 vorgesehen. Beispielsweise ist ein Temperatursensor 65, zum Beispiel ein entsprechender Widerstand, vorgesehen, der Sensorwerte oder Temperaturwerte an den Mikrokontroller 40 sendet.

In dem schematischen Schaltbild gemäß Figur 5 ist zudem noch eine Kopplung zwischen einerseits der Überwachungseinrichtung 30 und andererseits der Steuerung 26 dargestellt, d.h. dass der Mikrokontroller 40 beispielsweise mit einem Mikrokontroller 70 der Steuerung 26 direkt kommuniziert. Somit kann der Mikrokontroller 40 beispielsweise das Präsenzsignal 66 direkt an die Steuerung 26 übermitteln, welche ihrerseits wiederum die Anzeigeeinrichtung 67 ansteuert, beispielsweise zu einer entsprechenden Signalisierung, ob die Partikelsammeleinrichtung 80 an den Partikelabfuhr-Anschluss 20 angeschlossen ist oder nicht. Die Anzeigeeinrichtung 67 umfasst z.B. eine LED.

Der Mikrokontroller 40 kann auch eine Logikschaltung oder Verzögerungsschaltung umfassen derart, dass er erst nach einer gewissen Zeit, wenn der Antriebsmotor 12 der Hand-Werkzeugmaschine 10 angelaufen ist, die Überwachung des Partikelstroms P beginnt, also beispielsweise die Überwachungssensoren 60, 51, 54 aktiviert bzw. deren Signale auswertet.

Vorteilhaft ist vorgesehen, dass die Überwachungseinrichtung 30 zum Abschalten oder Blockieren des Antriebsmotors 12 ausgestaltet ist. Wenn also beispielsweise die Präsenzsignale 66 und/oder 55 und/oder 50 (eines würde reichen) signalisieren, dass die Partikelsammeleinrichtung 80 nicht an den Partikelabfuhr-Anschluss 20 angeschlossen ist, könnte die Überwachungseinrichtung 30 der Steuerung 26 signalisieren, den Antriebsmotor 12 zu blockieren. Diese Funktion ist vorteilhaft abschaltbar, d.h. dass bei einer Fehlfunktion der Überwachungseinrichtung 30 dennoch die Hand-Werkzeugmaschine gebraucht werden kann. Beispielsweise ist ein separater (De-)Aktivierungsschalter oder Aktivierungsschalter vorgesehen (nicht dargestellt). Es ist auch denkbar, dass beispielsweise durch Drücken des Antriebsschalters 19 in einem vorbestimmten Rhythmus die Funktionen der Überwachungseinrichtung 30 eingeschaltet oder ausgeschaltet werden können.

## Patentansprüche

1. Hand-Werkzeugmaschine mit einem Antriebsmotor (12) und einer durch den Antriebsmotor (12) antreibbaren Werkzeugaufnahme (13), an der ein Arbeitswerkzeug (14), insbesondere ein Schleifwerkzeug, zur Bearbeitung eines Werkstücks (W) montierbar ist, wobei die Hand-Werkzeugmaschine (10) einen Partikelabfuhr-Anschluss (20) zum Anschluss einer insbesondere einen Saugstrom bereitstellenden Partikelsammeleinrichtung (80), insbesondere einen Staubsauger (89), aufweist, wobei der Partikelabfuhr-Anschluss (20) mit einem Arbeitsbereich (A) des Arbeitswerkzeugs (14) kommuniziert, so dass in dem Arbeitsbereich (A) bei der Bearbeitung des Werkstücks (W) durch das Arbeitswerkzeug (14) anfallende Partikel, insbesondere Staub und/oder Späne, als eine Partikelströmung (P) über den Partikelabfuhr-Anschluss (20) aus dem Arbeitsbereich (A) weg in die Partikelsammeleinrichtung (80) förderbar sind, **dadurch gekennzeichnet, dass** sie eine Überwachungseinrichtung (30) mit mindestens einem Überwachungssensor (32, 51, 54, 60) zur Bereitstellung eines von einer Präsenz der Partikelsammeleinrichtung (80) an dem Partikelabfuhr-Anschluss (20) abhängigen Präsenzsignals (50, 55, 66) aufweist, und dass die Überwachungseinrichtung (30) zur Auslösung mindestens einer Funktion in Abhängigkeit von dem Präsenzsignal (50, 55, 66) ausgestaltet ist.

2. Hand-Werkzeugmaschine nach Anspruch 1, **dadurch gekennzeichnet, dass** die Überwachungseinrichtung (30) mindestens einen Überwachungssensor (32, 51, 54, 60) zur Bereitstellung mindestens einer von der Partikelströmung (P) über den Partikelabfuhr-Anschluss (20) abhängigen Partikelströmungsinformation (41) aufweist und zur Auslösung mindestens einer Funktion in Abhängigkeit von der mindestens einen Partikelströmungsinformation (41) ausgestaltet ist.

3. Hand-Werkzeugmaschine nach Anspruch 1 oder 2, **dadurch gekennzeichnet, dass** der mindestens eine Überwachungssensor (32, 51, 54, 60) einen optischen Sensor und/oder einen induktiven oder magnetisch schaltbaren Sensor und/oder einen Tastsensor zur Überwachung des Partikelabfuhr-Anschlusses (20) aufweist, wobei ein jeweiliger Sensor durch ein Anschlusselement (85), insbesondere eine Anschlussmuffe, der Partikelsammeleinrichtung (80) betätigbar ist.

4. Hand-Werkzeugmaschine nach einem der vorhergehenden Ansprüche, **dadurch gekennzeichnet, dass** der mindestens eine Überwachungssensor (32, 51, 54, 60) zur Erfassung einer Abschattung des Partikelabfuhr-Anschlusses (20) durch die Partikelsammeleinrichtung (80) ausgestaltet ist und/oder in einem Innenraum des Partikelabfuhr-Anschlusses (20) oder eines zu dem Partikelabfuhr-Anschluss (20) führenden Partikelabfuhrkanals angeordnet ist oder über einen Lichtleiter (62) mit dem Innenraum kommuniziert und/oder dass der mindestens eine Überwachungssensor (32, 51, 54, 60) durch eine Abschattungseinrichtung gegenüber Fremdlicht-Einflüssen, insbesondere aus dem Arbeitsbereich (A) geschützt ist.

5. Hand-Werkzeugmaschine nach einem der vorhergehenden Ansprüche, **dadurch gekennzeichnet, dass** der mindestens eine Überwachungssensor (32, 51, 54, 60) elektrische Kontakte (52, 53) und die Partikelsammeleinrichtung (80) eine insbesondere durch eine Antistatik-Leitungsanordnung gebildete elektrische Leitung aufweisen, wobei die elektrische Leitung beim Anschluss der Partikelsammeleinrichtung (80) an den Partikelabfuhr-Anschluss (20) die elektrischen Kontakte (52, 53) miteinander elektrisch verbindet.

6. Hand-Werkzeugmaschine nach einem der vorhergehenden Ansprüche, **dadurch gekennzeichnet, dass** die Überwachungseinrichtung (30) mindestens einen Temperatursensor (65) zu einer Temperaturkompensation des Präsenzsignals (50, 55, 66) und/oder der mindestens einen Partikelströmungsinformation (41) der Partikelströmung (P) aufweist.

7. Hand-Werkzeugmaschine nach einem der vorhergehenden Ansprüche, **dadurch gekennzeichnet, dass** der mindestens eine Überwachungssensor (32, 51, 54, 60) einen Strömungssensor und/oder einen Drucksensor, insbesondere einen Differenzdrucksensor und/oder eine Temperatursensoranordnung (32, 33) zur Erfassung eines Drucks und/oder einer Strömungsgeschwindigkeit der Partikelströmung (P) umfasst.

8. Hand-Werkzeugmaschine nach einem der vorhergehenden Ansprüche, **dadurch gekennzeichnet, dass** der mindestens eine Überwachungssensor (32, 51, 54, 60) an einem Fremdlufteinlass (36) angeordnet ist, über den Fremdluft (F) in die Partikelströmung (P) zu dem Partikelabfuhr-Anschluss (20) einströmen kann, oder an einem Bypasskanal (34) angeordnet ist, über den ein Teil der Partikelströmung (P) strömt.

9. Hand-Werkzeugmaschine nach einem der vorhergehenden Ansprüche, **dadurch gekennzeichnet, dass** der mindestens eine Überwachungssensor (60) einen insbesondere optischen Sensor zur Erfassung einer Trübung der Partikelströmung (P) durch Partikel umfasst.

10. Hand-Werkzeugmaschine nach einem der vorhergehenden Ansprüche, **dadurch gekennzeichnet, dass** die Überwachungseinrichtung (30) die mindestens eine Funktion in Abhängigkeit davon auslöst, ob der mindestens eine Überwachungssensor (32, 51, 54, 60) ein Fehlen der Partikelsammeleinrichtung (80) an dem Partikelabfuhr-Anschluss (20) und/oder ein Absinken der Partikelströmung (P) unter einen Schwellwert signalisiert.

11. Hand-Werkzeugmaschine nach einem der vorhergehenden Ansprüche, **dadurch gekennzeichnet, dass** die mindestens eine Funktion eine Ausgabe der Partikelströmungsinformation (41) und/oder des Präsenzsignals (50, 55, 66) an einer optischen und/oder akustischen Anzeigeeinrichtung (67) umfasst.

12. Hand-Werkzeugmaschine nach einem der vorhergehenden Ansprüche, **dadurch gekennzeichnet, dass** die mindestens eine Funktion eine insbesondere drahtlose Steuerung, insbesondere eine Begrenzung, einer Antriebsleistung des Antriebsmotors (12) umfasst und/oder eine Ansteuerung eines Saugaggregats (81) der Partikelsammeleinrichtung (80) umfasst.

13. Hand-Werkzeugmaschine nach einem der vorhergehenden Ansprüche, **dadurch gekennzeichnet, dass** die Überwachungseinrichtung (30) zu einer logischen Verknüpfung der mindestens einen Partikelströmungsinformation (41) der Partikelströmung (P) und des Präsenzsignals (50, 55, 66) ausgestaltet ist.

14. Hand-Werkzeugmaschine nach einem der vorhergehenden Ansprüche, **dadurch gekennzeichnet, dass** die Überwachungseinrichtung (30) eine Verzögerungslogik aufweist, die erst nach einer vorbestimmten Zeit nach einem Anlaufen des Antriebsmotors (12) der Hand-Werkzeugmaschine (10) eine Störungsinformation erzeugt, wenn das Präsenzsignal (50, 55, 66) ein Fehlen der Partikelsammeleinrichtung (80) an dem Partikelabfuhr-Anschluss (20) und/oder die Partikelströmungsinformation (41) eine für eine vorbestimmte Betriebsart der Hand-Werkzeugmaschine (10) unzulässige Partikelströmung (P) anzeigt.

15. Hand-Werkzeugmaschine nach einem der vorhergehenden Ansprüche, **dadurch gekennzeichnet, dass** sie einen Aktivierungsschalter zum Aktivieren oder Deaktivieren der Überwachungseinrichtung (30) aufweist, wobei vorteilhaft vorgesehen ist, dass der Aktivierungsschalter durch ein Anschlusselement (85) der Partikelsammeleinrichtung (80) betätigbar ist und/oder durch einen Antriebsschalter zum Schalten des Antriebsmotors (12) betätigbar oder gebildet ist.

## Claims

1. Hand-operated power tool with a drive motor (12) and a tool holder (13) drivable by the drive motor (12) and on which a working tool (14), in particular a grinding tool for machining a workpiece (W), may be mounted, wherein the hand-operated power tool (10) has a particle removal connection (20) for the connection of a particle collecting device (80), in particular a vacuum cleaner (89), wherein the particle removal connection (20) communicates with a working area (A) of the working tool (14), so that in the working area (A) during machining of the workpiece (W), particles arising due to the working tool (14), in particular dust and/or chips, may be conveyed as a particle flow (P) via the particle removal connection (20) out of the working area (A) into the particle collecting device (80), **characterised in that** it has a monitoring device (30) with at least one monitoring sensor (32, 51, 54, 60) for the provision of a presence signal (50, 55, 56) dependent on the presence of the particle collecting device (80) at the particle removal connection (20), and that the monitoring device (30) is designed to trigger at least one function depending on the presence signal (50, 55, 56).

2. Hand-operated power tool according to claim 1, **characterised in that** the monitoring device (30) has at least one monitoring sensor (32, 51, 54, 60) for the provision of at least one particle flow information element (41) depending on the particle flow (P) through the particle removal connection (20), and is designed to trigger at least one function depending on the particle flow information (41).

3. Hand-operated power tool according to claim 1 or 2, **characterised in that** the monitoring sensor or sensors (32, 51, 54, 60) has or have an optical sensor and/or an inductively or magnetically switchable sensor and/or a tactile sensor for monitoring the particle removal connection (20), wherein each sensor may be actuated by a connection element (85), in particular a splice, of the particle collecting device (80).

4. Hand-operated power tool according to any of the preceding claims, **characterised in that** the monitoring sensor or sensors (32, 51, 54, 60) is or are designed to detect any shading of the particle removal connection (20) by the particle collecting device (80) and is or are mounted in an interior of the particle removal connection (20) or in a particle removal passage leading to the particle removal connection (20), or communicate(s) with the interior via a fibre-optic conductor (62), and/or that the the monitoring sensor or sensors (32, 51, 54, 60) is or are protected from extraneous light effects, in particular from the working area (A), by a shading device.

5. Hand-operated power tool according to any of the preceding claims, **characterised in that** the monitoring sensor or sensors (32, 51, 54, 60) has or have electrical contacts (52, 53) and the particle collecting device (80) has an electrical line formed in particular by an antistatic wiring assembly, wherein the electrical line connects the electrical contacts (52, 53) to one another when the particle collecting device (80) is connected to the particle removal connection (20).

6. Hand-operated power tool according to any of the preceding claims, **characterised in that** the monitoring device (30) has at least one temperature sensor (65) for temperature compensation of the presence signal (50, 55, 56) and/or of the particle flow information (41) of the particle flow (P).

7. Hand-operated power tool according to any of the preceding claims, **characterised in that** the monitoring sensor or sensors (32, 51, 54, 60) includes or include a flow sensor and/or a pressure sensor, in particular a differential pressure sensor, and/or a temperature sensor array (32, 33) for detecting a pressure and/or a flow rate of the particle flow (P).

8. Hand-operated power tool according to any of the preceding claims, **characterised in that** the monitoring sensor or sensors (32, 51, 54, 60) is or are located at an extraneous air inlet (36), through which extraneous air (F) in the particle flow (P) is able to flow into the particle removal connection (20), or is or are located at a bypass duct (34), through which a portion of the particle flow (P) flows.

9. Hand-operated power tool according to any of the preceding claims, **characterised in that** the monitoring sensor or sensors (60) include or includes a sensor, in particular optical, to detect turbidity of the particle flow (P) due to particles.

10. Hand-operated power tool according to any of the preceding claims, **characterised in that** the monitoring device (30) triggers the function or functions depending on whether the monitoring sensor or sensors (32, 51, 54, 60) signals or signal an absence of the particle collecting device (80) at the particle removal connection (20) and/or a drop in the particle flow (P) below a threshold value.

11. Hand-operated power tool according to any of the preceding claims, **characterised in that** the function or functions includes or include output of the particle flow information (41) and/or of the presence signal (50, 55, 56) at a visual or audible indicator device (67).

12. Hand-operated power tool according to any of the preceding claims, **characterised in that** the function or functions includes or include a control, in particular wireless, in particular a limitation of the drive power of the drive motor (12), and/or activation of a suction unit (81) of the particle collecting device (80).

13. Hand-operated power tool according to any of the preceding claims, **characterised in that** the monitoring device (30) is designed for logical linking of the particle flow information (41) item or items of the particle flow (P) and the presence signal (50, 55, 56).

14. Hand-operated power tool according to any of the preceding claims, **characterised in that** the monitoring device (30) has a delay logic which generates flow information only after a predetermined time following start-up of the drive motor (12) of the hand-operated power tool (10), if the presence signal (50, 55, 56) indicates an absence of the particle collecting device (80) at the particle removal connection (20) and/or the particle flow information (41) indicates an unacceptable particle flow (P) for a predetermined operating mode of the hand-operated power tool (10).

15. Hand-operated power tool according to any of the preceding claims, **characterised in that** it has an activation switch for activation or de-activation of the monitoring device (30), wherein it is advantageously provided that the activation switch is actuable by a connection element (85) of the particle collecting device (80) and/or is actuable or formed by a drive switch for switching the drive motor (12).

## Revendications

1. Machine-outil manuelle avec un moteur d'entraînement (12) et un logement d'outil (13) entraînable par le moteur d'entraînement (12), sur lequel un outil de travail (14), en particulier un outil de meulage, peut être monté pour l'usinage d'une pièce (W), dans laquelle la machine-outil manuelle (10) présente un raccord d'évacuation de particules (20) pour le raccordement d'un dispositif de collecte de particules (80) mettant à disposition en particulier un courant d'aspiration, en particulier un aspirateur de poussières (89), dans laquelle le raccordement d'évacuation de particules (20) communique avec une zone de travail (A) de l'outil de travail (14), de sorte que des particules produites dans la zone de travail (A), lors de l'usinage de la pièce (W) par l'outil de travail (14), en particulier des poussières et/ou des copeaux puissent être transportées comme un courant de particules (P) par le raccord d'évacuation de particules (20) hors de la zone de travail (A) dans le dispositif de collecte de particules (80), **caractérisée en ce qu'**elle présente un dispositif de surveillance (30) avec au moins un capteur de surveillance (32, 51, 54, 60) pour la mise à disposition d'un signal de présence (50, 55, 66) dépendant d'une présence du dispositif de collecte de particules (80) sur le raccord d'évacuation de particules (20), et **en ce que** le dispositif de surveillance (30) est configuré pour le déclenchement d'au moins une fonction selon le signal de présence (50, 55, 66).

2. Machine-outil manuelle selon la revendication 1, **caractérisée en ce que** le dispositif de surveillance (30) présente au moins un capteur de surveillance (32, 51, 54, 60) pour la mise à disposition d'au moins une information de courant de courant de particules (41) dépendant du courant de particules (P) par le raccord d'évacuation de particules (20) et est configuré pour le déclenchement d'au moins une fonction selon l'au moins une information de courant de particules (41).

3. Machine-outil manuelle selon la revendication 1 ou 2, **caractérisée en ce que** l'au moins un capteur de surveillance (32, 51, 54, 60) présente un capteur optique et/ou un capteur inductif ou commutable magnétiquement et/ou un capteur tactile pour la surveillance du raccord d'évacuation de particules (20), dans lequel un capteur respectif est actionnable par un élément de raccordement (85), en particulier un manchon de raccordement, du dispositif de collecte de particules (80).

4. Machine-outil manuelle selon l'une des revendications précédentes, **caractérisée en ce que** l'au moins un capteur de surveillance (32, 51, 54, 60) est configuré pour la détection d'un ombrage du raccord d'évacuation de particules (20) par le dispositif de collecte de particules (80) et/ou est agencé dans un espace intérieur du raccord d'évacuation de particules (20) ou d'un canal d'évacuation de particules menant au raccord d'évacuation de particules (20) ou communique par un conducteur lumineux (62) avec l'espace intérieur et/ou **en ce que** l'au moins un capteur de surveillance (32, 51, 54, 60) est protégé par un dispositif d'ombrage, des influences de la lumière extérieure, en particulier depuis la zone de travail (A).

5. Machine-outil manuelle selon l'une des revendications précédentes, **caractérisée en ce que** l'au moins un capteur de surveillance (32, 51, 54, 60) présente des contacts électriques (52, 53) et le dispositif de collecte de particules (80) présente une conduite électrique formée en particulier par un agencement de conduite antistatique, dans laquelle la conduite électrique relie électriquement les contacts électriques (52, 53) entre eux lors du raccordement du dispositif de collecte de particules (80) au raccord d'évacuation de particules (20).

6. Machine-outil manuelle selon l'une des revendications précédentes, **caractérisée en ce que** le dispositif de surveillance (30) présente au moins un capteur de température (65) pour une compensation de température du signal de présence (50, 55, 66) et/ou l'au moins une information de courant de particules (41) du courant de particules (P).

7. Machine-outil manuelle selon l'une des revendications précédentes, **caractérisée en ce que** l'au moins un capteur de surveillance (32, 51, 54, 60) comporte un capteur de courant et/ou un capteur de pression, en particulier un capteur de pression différentielle et/ou un agencement de capteur de température (32, 33) pour la détection d'une pression et/ou d'une vitesse de courant du courant de particules (P).

8. Machine-outil manuelle selon l'une des revendications précédentes, **caractérisée en ce que** l'au moins un capteur de surveillance (32, 51, 54, 60) est agencé sur une entrée d'air externe (36), par laquelle de l'air externe (F) peut affluer dans le courant de particules (P) vers le raccord d'évacuation de particules (20), ou est agencé sur un canal de dérivation (34), par lequel une partie du courant de particules (P) s'écoule.

9. Machine-outil manuelle selon l'une des revendications précédentes, **caractérisée en ce que** l'au moins un capteur de surveillance (60) comporte un capteur en particulier optique pour la détection d'un trouble du courant de particules (P) par des particules.

10. Machine-outil manuelle selon l'une des revendications précédentes, **caractérisée en ce que** le dispositif de surveillance (30) déclenche l'au moins une fonction selon si l'au moins un capteur de surveillance (32, 51, 54, 60) signalise un défaut du dispositif de collecte de particules (80) sur le raccord d'évacuation de particules (20) et/ou un abaissement du courant de particules (P) sous une valeur seuil.

11. Machine-outil manuelle selon l'une des revendications précédentes, **caractérisée en ce que** l'au moins une fonction comporte une émission de l'information de courant de particules (41) et/ou du signal de présence (50, 55, 66) sur un dispositif d'affichage (67) optique et/ou acoustique.

12. Machine-outil manuelle selon l'une des revendications précédentes, **caractérisée en ce que** l'au moins une fonction comporte une commande en particulier sans fil, en particulier une limitation, d'une puissance d'entraînement du moteur d'entraînement (12) et/ou comporte une commande d'un groupe d'aspiration (81) du dispositif de collecte de particules (80).

13. Machine-outil manuelle selon l'une des revendications précédentes, **caractérisée en ce que** le dispositif de surveillance (30) est configuré en une liaison logique d'au moins une information de courant de particules (41) du courant de particules (P) et du signal de présence (50, 55, 66).

14. Machine-outil manuelle selon l'une des revendications précédentes, **caractérisée en ce que** le dispositif de surveillance (30) présente une logique à retard qui ne génère qu'après un temps prédéterminé après un démarrage du moteur d'entraînement (12) de la machine-outil manuelle (10) une information de courant si le signal de présence (50, 55, 66) indique un défaut du dispositif de collecte de particules (80) sur le raccord d'évacuation de particules (20) et/ou l'information de courant de particules (41) indique un courant de particules (P) non autorisé pour un type de fonctionnement prédéterminé de la machine-outil manuelle (10).

15. Machine-outil manuelle selon l'une des revendications précédentes, **caractérisée en ce qu'**elle présente un commutateur d'activation pour l'activation ou la désactivation du dispositif de surveillance (30), dans laquelle il est avantageusement prévu que le commutateur d'activation peut être actionné par un élément de raccordement (85) du dispositif de collecte de particules (80) e/ou peut être actionné ou est formé par un commutateur d'entraînement pour la commutation du moteur d'entraînement (12).
